# EUROPEAN PATENT SPECIFICATION

(11) **EP 2 048 815 B1**
(45) Date of publication and mention of the grant of the patent: **08.01.2014**
(21) Application number: 07764258.5
(22) Date of filing: 20.07.2007
(51) Int. Cl.: H04L 12/14

(54) **A METHOD, A SYSTEM AND A DEVICE FOR ADVICE OF CHARGE SUPPLEMENTARY SERVICE**
VERFAHREN, SYSTEM UND EINRICHTUNG FÜR EINEN GEBÜHRENBERECHNUNGSMITTEILUNGSERGÄNZUNGSDIENST
PROCÉDÉ, SYSTÈME ET DISPOSITIF POUR UN AVIS DE SERVICE SUPPLÉMENTAIRE DE CHARGE

(30) Priority: 01.08.2006 CN 200610104215
(43) Date of publication of application: 15.04.2009
(73) Proprietor: Huawei Technologies Co., Ltd., Longgang District, Shenzhen Guangdong 518129 (CN)
(72) Inventor: SHAN, Mingjun, Shenzhen, Guangdong 518129 (CN); LI, Chun, Shenzhen, Guangdong 518129 (CN)
(74) Representative: Goddar, Heinz J.
(86) International application number: PCT/CN2007/070331
(87) International publication number: WO 2008/017262

(56) References cited:
- WO-A1-98/59504
- CN-A- 1 150 728
- CN-A- 1 267 432
- CN-A- 1 474 538
- US-A1- 2006 212 511
- HARRI HAKALA LEENA MATTILA ERICSSON JUHA-PEKKA KOSKINEN MARCO STURA JOHN LOUGHNEY NOKIA: "AAA Working Group Diameter Credit-Control Application; draft-ietf-aaa-diameter-cc-06.txt" IETF STANDARD-WORKING-DRAFT, INTERNET ENGINEERING TASK FORCE, IETF, CH, vol. aaa, no. 6, 12 August 2004 (2004-08-12), XP015038020 ISSN: 0000-0004
- "Digital cellular telecommunications system (Phase 2+); Universal Mobile Telecommunications System (UMTS); Telecommunication management; Charging management; Online Charging System (OCS): Applications and interfaces (3GPP TS 32.296 version 6.2.0 Release 6); ETSI TS 132 296" ETSI STANDARDS, LIS, SOPHIA ANTIPOLIS CEDEX, FRANCE, vol. 3-SA5, no. V6.2.0, 1 September 2005 (2005-09-01), XP014032809 ISSN: 0000-0001

## Description

The application claims priority to Chinese Patent Application with the publication No. CN 101119410, entitled "A Method and System for an Advice of Charging Supplementary Service", filed on 1st Aug. 2006.

### FIELD OF THE INVENTION

The present invention relates generally to the field of communication; and in particular to a method, system and device for an advice of charging supplementary service.

### BACKGROUND

With the rapid development of communication technologies, various communication mechanism and service are more widely used. Faced with so many telecommunication services, users need to know the charge of the communication in time so as to control the charge effectively. On the other hand, lawbreakers intrigue some uninformed users to make phone calls or use data service with very high charges by tricks, which would unwarily cause lots of lost of communication charge. If the user may be advised of the rate of the communication service before using the service and the charge for it during and at the end of the service delivery, unnecessary account consuming can be greatly reduced. The telecommunication operators also want to provide communication service charging information to the user timely, which on one hand can improve the user experience, on other hand can bring extra revenue through such supplementary service. Users would also enjoy the service more freely with the transparency of the service charge improved.

In a communication system, a user may be provided with charging information, such as call rate, duration time and cost of each call, through a supplementary service named Advice of Charging (AoC). The user can also get a rate information when the rate changes. The charging information is generally presented to the user at the start of a call, or during a call or at a certain time after ending a call, through audio prompt or by displaying the information on the screen of the user device through short message. Other than that, the service can also provide the user with a total charge within a certain period of time (such as one month, one week or one day). The balance of the subscriber card to the user can also be provided.

The AoC supplementary service makes it possible for the user to learn the service charging information before using the service, which prevents unnecessary high communication expenditure caused by a user's unawarenss of the charge. After using the service, the user can be informed of the cost of the service consumed timely, therefore effectively manages his account.

AoC service has been existing in voice call for a long time; however, it is not supported very well in data service.

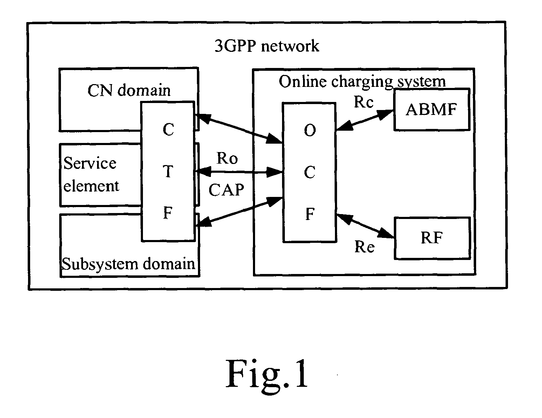

Fig. 1 illustrates a block diagram of an online charging architecture defined by 3rd Generation Partnership Project (3GPP).

Charging Trigger Function (CTF) is a logic function section implemented on various network elements in a telecommunication network. CTF collects charging-related information from core network element, service element and subsystem, and transmits the charging information to the online charging system via a charging interface (such as Ro, CAP). The online charging system receives the charging request message and processes it, such as rating, margin reservation, and returns the processed result to the CTF through a charging response message. The CTF controls the service usage according to the charging response.

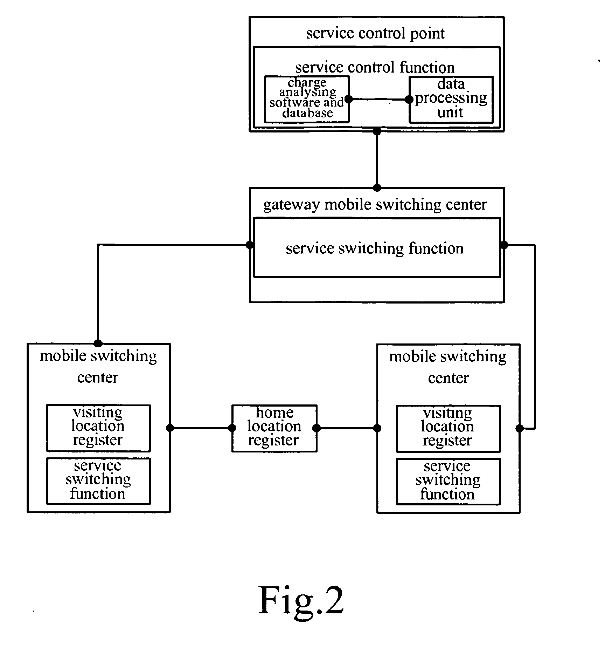

A prior art method for implementing the AoC supplementary service makes use of Intelligent Network Application Part (INAP) to realized the AoC function, the structure of which is shown in Fig. 2. When the user terminal uses the intelligent network service, a service control point (SCP) transmits AoC information to a mobile switching center through INAP protocol, the mobile switching center then transmits the AoC information to the user terminal.

The above solution realizes the transmission of the AoC information in the intelligent voice calls through SS7.

However, firstly, the solution above is essentially based on voice call and it's decided by the charging system on whether it is necessary to present AoC to the user, therefore the user can not set or choose whether to accept the AoC information. This can not satisfy the requirement of the flexible packet switch (PS) domain service.

Secondly, in the intelligent network solution which is mainly used for voice call, the charging system generates fixed format AoC, for example, a text message including call duration time. In using the currently available flexible data service, a charging system can serve several application servers, thus, fixed-format AoC can not satisfy the AoC requirement of the PS domain any more. The application server can not customize AoC format, neither can the user customize AoC format to fit his requirement, or customize the trigger condition.

To address the problem in the above prior art solution, another prior art method for implementing the AoC supplementary service will be discussed in the following.

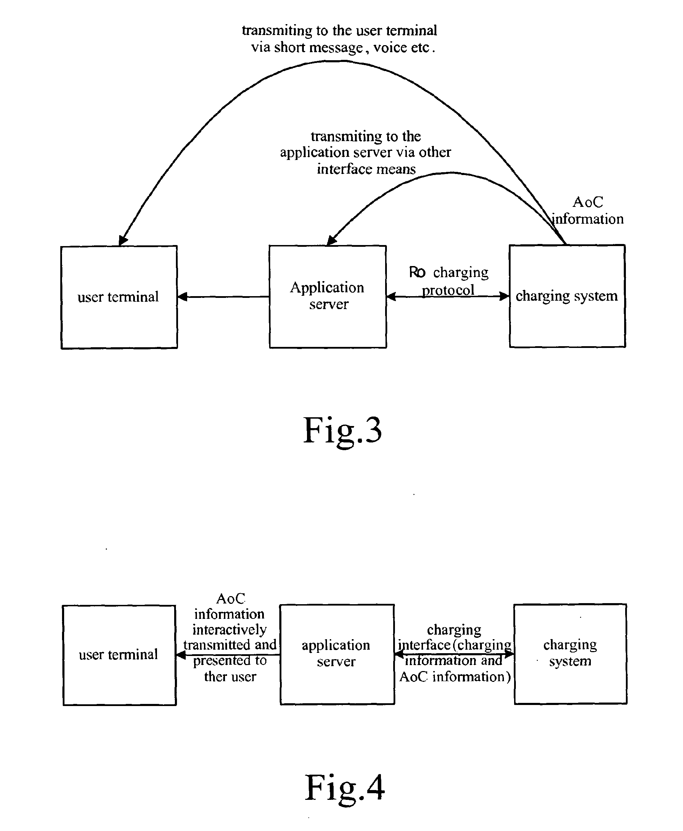

As shown in Fig. 3, in this solution, the charging system informs the user of the service charging information through short message or audio prompt after the service is finished or during the service.

The charging system can send the AoC information to the user directly by means of short message or audio prompt. The AoC information can also be sent to the application server (here the application server is an application server providing the service) by means of other interfaces (non-charging interface). However, this charging presentation method is relatively simple in that it can not present to the user the service promotion related to the user's subscription stored in the charging system or other operator management system as well as the user's balance promptly.

Furthermore, in this solution, the application server and user acquire the AoC information from a charging system through other interfaces. This requires a third party communication mechanism and makes the acquisition and transmission of the AoC information more complicated.

HARRI HAKALA LEENA MATTILA ERICSSON JUHA-EKKA KOSKINEN MARCO STURA JOHN LOUGHNEY NOKIA: "AAA Working Group Diameter Credit-Control Application; draft-ietf-aaa-diameter-cc-06.txt" IETF STANDARD-WORKING-DRAFT, INTERNET ENGINEERING TASK FORCE, IETF, CH, vol. aaa, no. 6, 2004-08-12, discloses a diameter credit-control (CC) application, in which a CC server interacts with a CC client to push cost information to an end user.

ETSI TS 132 296, version 6.2.0, 2005-09, discloses a online charging system (OCS) which includes charging function for performing charging and credit control, rating function for performing both monetary and non-monetary unit determination, and account balance management function.

WO98/59504A1 discloses a method of providing advice of charge service, which includes: informing a control point of a call involving the mobile station and a switching node currently serving the mobile station; determining at the control point one or more advice of charge parameters for the call; and sending the one or more advice of charge parameters to the serving switching node for delivery to the mobile station.

### SUMMARY

The objective of the present invention is to provide a method, system and device for implementing an Advice of Charging supplementary service, so as to transmit more enriched AoC information by using the established channel for the charging session.

The technical solutions of the embodiments of the present disclosure are as follows:

A method for implementing an Advice of Charge (AoC) supplementary service includes the following:

receiving, by an application server, a service request initiated by a user terminal, and establishing, by the application server, a charging session with a charging system; transmitting, by the application server, an AoC information content customization request and/or a trigger condition customization request to the charging system, according to a customization request from the terminal, wherein the customization request is the AoC information content customization request or the trigger condition customization request or both, verifying, by the charging system, the AoC information content customization request and/or trigger condition customization request; and acquiring the AoC information according to the AoC information content customization request and/or trigger condition customization request when the verification is successful, and

transmitting the AoC information to the application server through a channel for the charging session; transmitting, by the application server, the AoC information to the user terminal.

A charging system includes the following:
a session unit adapted to establish a channel used for a charging session with an application server and conduct the charging session; an AoC information processing unit adapted to acquire the AoC information and transmit the AoC information through the channel for the charging session, and
a verification unit, adapted to receive and verify an AoC information content customization request and/or trigger condition customization request and inform the AoC information processing unit when the verification is successful after establishing the charging session; and receive and verify the AoC information and/or the trigger condition and save them if the verification is successful, before establishing the charging session, wherein the AoC information processing unit is adapted to acquire the AoC information according to the AoC information content customization request and/or trigger condition customization request.

A system adapted to implement an AoC supplementary service includes: the charging system mentioned above an application server adapted to establish a charging session with the charging system, the charging system is adapted to receive a service request from a user terminal and transmit the AoC information to the application server through a channel for the charging session.

Firstly, the charging system of the present invention uses the established channel for the charging session to transmit the AoC information to the AS, therefore it does not need a third party interface. This simplifies the transmission procedure of the AoC information and improves the operation efficiency of the system.

Secondly, the AoC information of the present invention is dynamic AoC information. The charging system enquiries the management system and the service system for the AoC information, and provides it to the AS, therefore, the AoC information of the present invention includes more content.

Thirdly, the present invention allows the user to customize the content of the AoC information to be transmitted and the trigger condition for transmitting the AoC information. This makes the application of the inventive method more flexible.

Fourthly, in the present invention, a plurality of ways may be used by the user to actively customize the content of the AoC information to be returned from the charging system through the AS, which makes the technical solution of the present invention more personal.

Finally, in the present invention, after receiving the AoC information transmitted by the charging system, several processing, including the addition of service-related comments etc, may be made to the AoC information by the AS. Thus, the content of the AoC information received by the user terminal is further enriched.

### BRIEF DESCRIPTION OF THE DRAWINGS

Fig. 1 is a schematic diagram of an online charging logic defined by 3GPP;
Fig. 2 is a schematic diagram of a system according to a first prior art solution;
Fig. 3 is a schematic diagram of a logic according to a second prior art solution;
Fig. 4 is a schematic diagram of a logic according to the present invention;
Fig. 5 is a flow chart of a first embodiment of the present invention;
Fig. 6 is a flow chart of a second embodiment of the present invention;
Fig. 7 is a signaling flow of a customization procedure according to the present invention;
Fig. 8 is a flow chart of a third embodiment of the present invention;
Fig. 9 is a signaling flow of an enquiry procedure according to the present invention;
Fig. 10 is a flow chart of a fourth embodiment of the present invention;
Fig. 11 is a signaling flow of a active update procedure according to the present invention;
Fig. 11a is a signaling flow of an alternative procedure of Fig. 11, in which the OCS notifies the application server, and the application server initiates the active enquiry procedure;
Fig. 12 is a signaling flow of a fifth embodiment of the present invention;
Fig. 13 is a signaling flow of a sixth embodiment of the present invention;
Fig. 14 is a signaling flow of a seventh embodiment of the present invention;
Fig. 14a is a signaling flow of an eighth embodiment of the present invention.

### DETAILED DESCRIPTION

The present invention provides a method and system for implementing an AoC supplementary service that provides more enriched AoC information to the user conveniently.

AoC is a service for providing users with relevant charging information of services. In a communication system, the AoC supplementary service may be used to provide a user with charging information, such as call rate, duration time and cost of each call. The user may also be provided with rate changing information when the rate changes. The charging information is generally presented to the user at start of a call, or during a call or at a certain time after ending a call, and it's presented to the user through audio prompt or displaying the information on the screen of the user device with short message. Other than that, the service can also provide the user with a total charge within a certain period of time (such as a month, a week or a day), and also provide balance to the user.

AoC information may be classified into the following two types according to the contents of the AoC information:

**Table 1**

| | Static AOC | Dynamic AOC |
|---|---|---|
| Source | Charging system, operation support system, service system, service management platform | Charging system |
| Main content | Service static rate, service introduction, fixed promotion, preference information | Variable service rate, remaining user credit line, total cost consumed by current service, total duration time consumed by current service, total traffic consumed by current service etc. |

Please refer to Fig. 4, the essence of the present invention is that the charging system transmit the AoC message to an application server (AS) according to an established charging channel ). The AS includes POC server, DCD server, IM server etc.

After a session between the charging system and the AS is established, a channel for the session is used to transmit some information related to charging. The present invention takes advantage of this feature to transmit the AoC message when transmitting the information related to charging. Comparing with Fig. 3, the AoC message transmission between the charging system and the AS is performed directly through a charging interface without the help of a third party interface.

Wherein, the AoC message transmitted between the charging system and the AS supports the following format:

**Table 2**

| Attribute | Type | Comment |
|---|---|---|
| AoC-information | Group | AVP for describing AoC information |
| Rate | Optional | Service price information, may be text or numeric |
| Balance | Optional | User account balance, may be text or numeric |
| Promotion | Optional | Promotion information, may be text |
| Charging-info | Optional | Describing charging information |
| Bonus | Optional | Bonus information for continuous usage of service |
| Used Service Unit | Optional | Total service |
| time | Optional | Total service time |
| volume | Optional | Total volume |
| money | Optional | Total used cost |

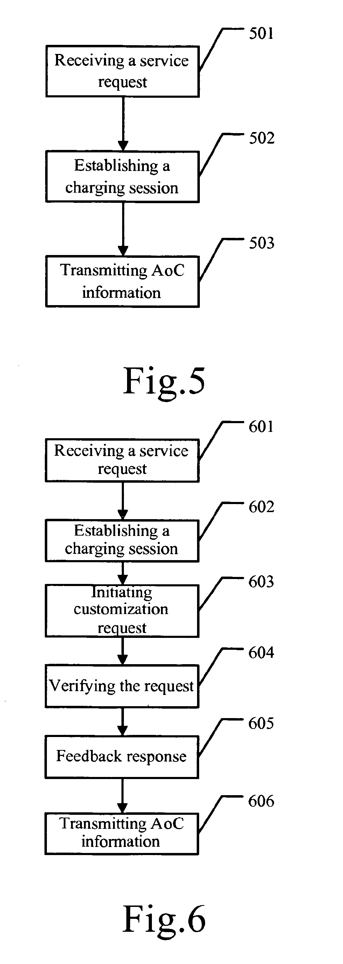

With reference to Fig. 5, the present invention includes the following generic steps:
501: Receiving a service request;
wherein, the AS receives the service request initiated by the user, such as making a call or connecting to the Internet.
502: Establishing a charging session;
wherein, the AS establishes the charging session with the charging system after receiving the service request.
503: Transmitting AoC information;
wherein, the charging system transmits the AoC information to the AS through a channel for the charging session. Upon receiving the AoC information, the AS forwards it to the user terminal and the user terminal displays the AoC information.

With reference to Fig. 6, an embodiment of the present invention includes the following steps:
601: Receiving a service request;
wherein, the AS receives a service request initiated by the user, such as making a call or connecting to the Internet.
602: Establishing a charging session;
wherein, the AS establishes a charging session with the charging system after receiving the service request.
603: Initiating customization request;
wherein, the user terminal first makes a customization request to the AS, the AS then forwards the customization request to the charging system.

The Customization request is a request for customizing the content of the AoC message; it can also be a request for customizing trigger condition. Both types of the customization request may be ordered from the charging system through the AS or through a third party service platform. Both customization requests may be made simultaneously, i.e. include the two customization requests in one customization message, or be done in two steps.

The customization request may be done in the following two ways:
1. The user interacts with the charging system through a service setting platform (such as Internet, a system in the service room) to set the conditions for customizing the AoC message before using the service;
2. During the use of service, the user transmits the AoC information customization request and/or trigger condition to the AS, the AS then sends the AoC information customization request and/or trigger condition to the charging system through the channel for the charging session.

The format of the customization request is shown in Table 3.

**Table 3**

| | | |
|---|---|---|
| AoC-Application | Group | AVP for describing the AoC customization request |
| Enable AoC | Enumerate | Whether to enable AoC function, Enumerate |
| Trigger Condition | Enumerate | trigger condition for sending AoC information, including: time, volume, dynamic account change etc. |
| Trigger Time | Optional | Trigger by time, recording time interval |
| Trigger volume | Optional | Trigger by volume, recording volume interval |
| Other Condition | Optional | Other trigger conditions defined by the operators |

The above table is just an example of the customization request format, which may be modified according to the use of the actual service in practical applications.

604: Verifying the customization request.

The charging system verifies the customization request and /or trigger condition received from the AS. The charging system includes an internal strategy for the customization request and trigger condition, and it verifies the customization request and trigger condition according to the strategy for the trigger condition and information about the user itself.

If the user information does not accord with the internal strategy for the customization request and trigger condition, the charging system decides that the verification fails.

If the trigger condition and customization request initiated by the user does not accord with the internal strategy for the customization request and trigger condition, the charging system can provide the AoC information to the user according to a default internal trigger condition and content format.

605: Feeding back response.

The charging system transmits the verification result for the customization request to the AS or to the user terminal directly according to the verification result. If the charging system transmits the verification result to the AS, the AS is required to forward the received verification result to the user terminal. The verification result is to provide the user with the AoC information according to the trigger condition and content format required by the user, or to provide the user with the AoC information according to the default trigger condition in the charging system, or not to provide the user with AoC information.

606: Transmitting AoC information.

If the verification result is to provide the user with the AoC information according to the trigger condition required by the user or according to the default trigger condition in the charging system, the charging system provides the AoC information to the AS, then the AS forwards the AoC information to the user. Obviously this step can be performed before or after step 605. The charging system can transmit the AoC information after verifying the customization request from the user, or it can transmit the verification result to the user or AS before transmitting AoC information;

A procedure for customizing AoC information is added to the embodiment.

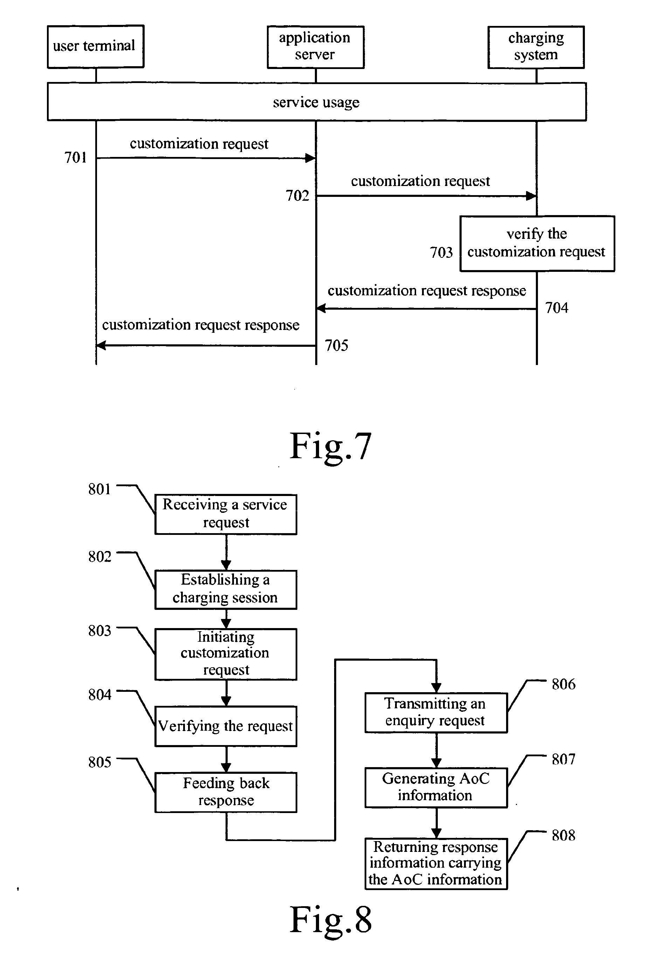

With reference to Fig. 7, the signaling flow for the customization procedure is discussed, which includes the following steps:
701: During the use of service, the user terminal transmits an AoC information customization request to the AS.
702: The AS transmits the AoC information customization request to the charging system.
703: The charging system verifies the AoC information customization request and/or trigger condition.
704: The charging system returns a response to the AoC information customization request to the AS.
705: The AS transmits the response to the AoC information customization request to the user terminal.

Wherein, steps 701 and 705 are optional.

With reference to Fig. 8, another embodiment of the present invention includes the following steps:
801: Receiving a service request;
wherein, the AS receives the service request initiated by the user.
wherein, the AS is a PoC server, or a DCD server or an IM server.
802: Establishing a charging session;
wherein, the AS establishes a charging session with the charging system after receiving the service request.
803: Initiating a customization request;
wherein, the user terminal first makes a customization request to the AS, the AS then forwards the request to the charging system.
804: Verifying the request;
wherein, the charging system verifies the customization request.
805: Feeding back response;
wherein, the charging system feeds back a customization response including whether the customization is successful to the AS; the AS forwards the received response to the user terminal.
806: Transmitting an enquiry request;
wherein, the AS transmits an AoC information enquiry request including information on the user and the currently-used service to the charging system.
807: Generating AoC information;
wherein, the charging system generates AoC information according to the request and the content of the received AoC information.
808: Returning response information;
wherein, the response information carries the AoC information.

The embodiment describes a scenario of transmitting AoC information, that is, the AS makes an enquiry on its own initiative, the charging system feeds back to the enquiry with a feedback message carrying the AoC information.

In this embodiment, steps 803, 804 and 805 are optional. Before using the service, the user can interact with the charging system through a service setting platform (such as Internet, a system in the service room) to set the condition for customizing AoC information.

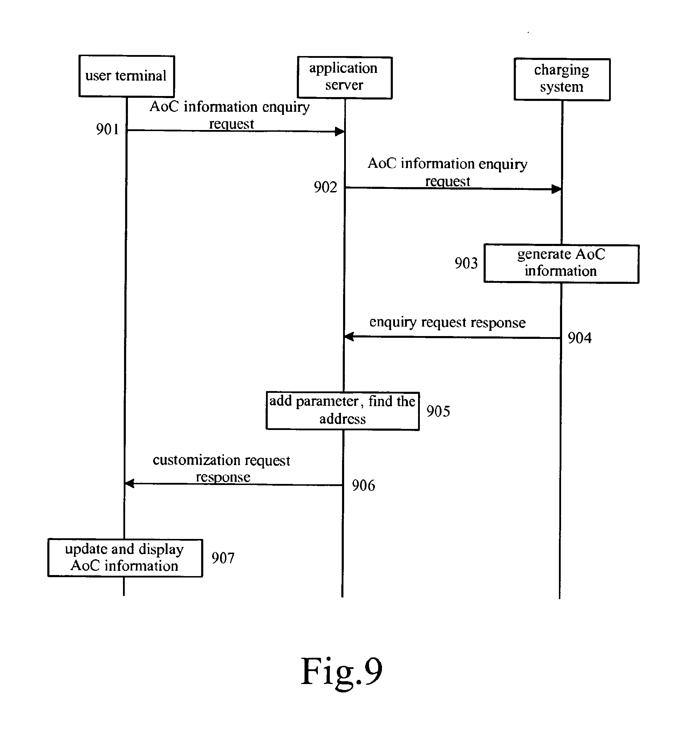

The signaling flow for the enquiry request is shown in Fig. 9, which includes the following steps:
901: The user terminal transmits an AoC information enquiry request to the AS.
902: The AS transmits the AoC information enquiry request to the charging system.
903: The charging system generates new AoC information according to the content of the AoC request.
904: The charging system returns a response carrying the AoC information to the AS.
905: The AS adds information related to the currently-used service to the AoC information, and/or converts AoC to a format required by the AS for interacting with the user terminal. The above related information may be, for example, when the user is using IM service, transmitting information such as service use duration time, number of friends etc. together with the AoC information to the user.
906: The As transmits the AoC information to the user terminal through the service interaction channel by using the enquiry request response.
907: The user terminal displays the updated AoC information to the user.
wherein step 907 is optional.

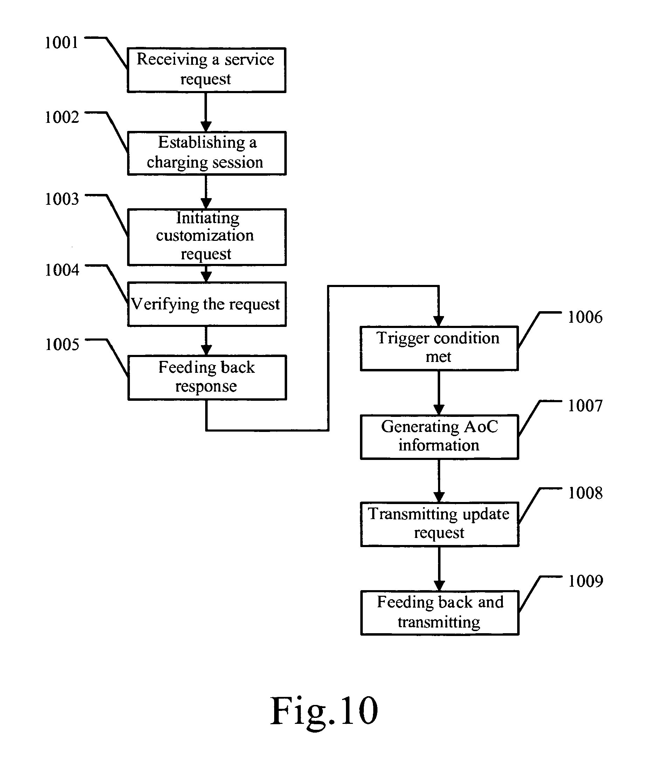

With reference to Fig. 10, a further embodiment of the present invention includes the following steps:
Steps 1001 to 1005 are the same as steps 801 to 805 in the third embodiment of the present invention, which will not be elaborated here.
1006: Determining that the trigger condition is satisfied;
wherein, the charging system determines that the current situation satisfies the trigger condition in the trigger condition customization request.

If the trigger condition is a trigger condition customized by the user, when satisfying the trigger condition, the charging system transmits the AoC information to the AS. Where the trigger condition includes, but is not limited to, service time, service volume, change of user account balance in the charging system exceeding a certain range, service rate information changing etc.

1007: Generating AoC information;
wherein, the charging system generates the AoC information according to the customization request.

1008: Transmitting update request for AoC information;
wherein, the charging system transmits the generated update request for AoC information to the AS through the charging interface.

1009: Feeding back an update response and transmitting AoC information;
wherein, the AS returns the AoC information response to the charging system and transmits the received AoC information to the user terminal.

The embodiment describes another situation of transmitting the AoC information, in which, the charging system transmits the update request to the AS on its own initiative when the charging system determines that the trigger condition is satisfied , and the AoC information is carried in the update request.

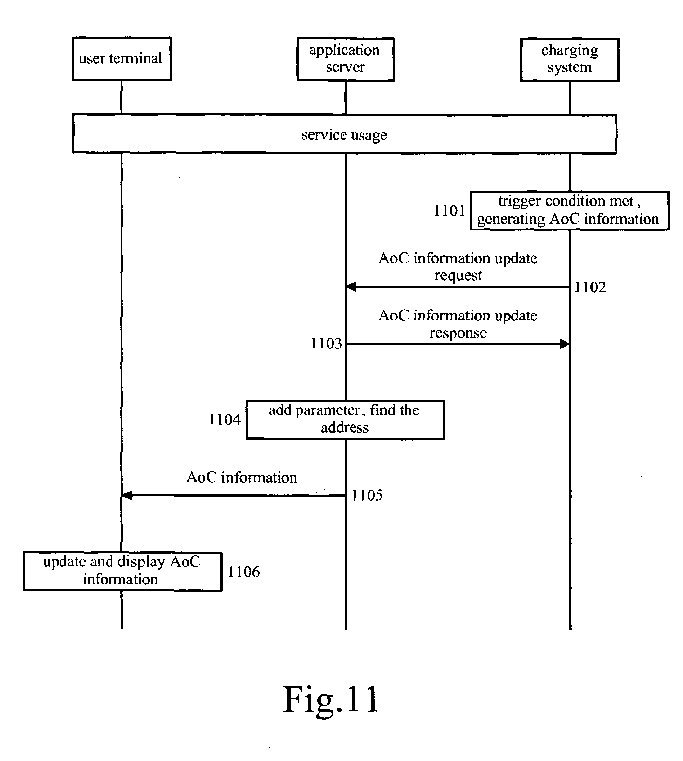

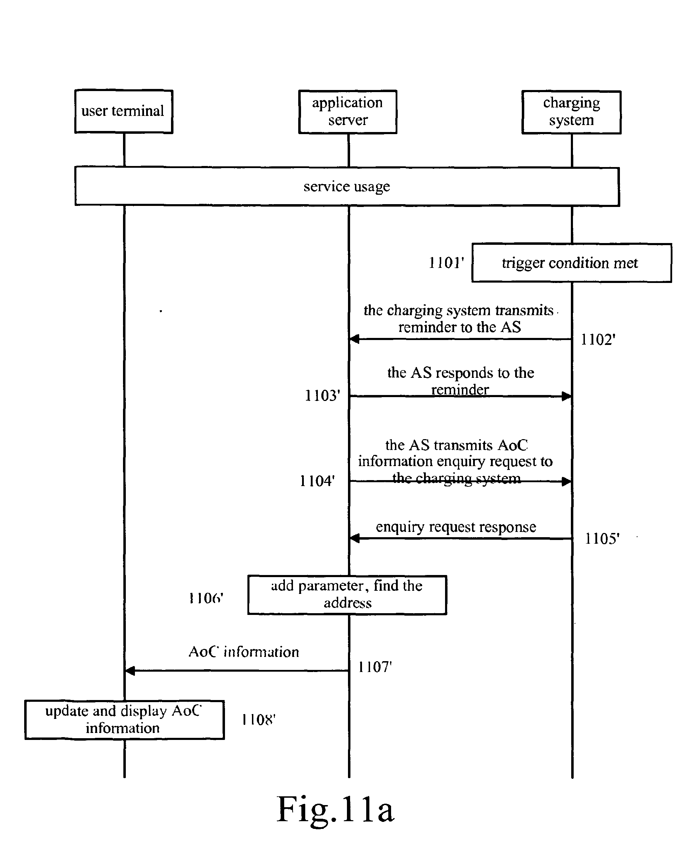

The signaling flow for the update request is shown in Fig. 11, which includes:
1101: The charging system detects that the trigger condition in an AoC reminder customization information is satisfied and generates new AoC information.
1102: The charging system transmits an AoC update request carrying AoC information to the AS through the charging interface.

Wherein, the charging interface may be a 3GPP Ro/Rf interface, OMA CH1/CH2 interface or 3GPP CAMEL protocol.

1103: The AS returns an AoC update response to the charging system.

1104: The AS adds information related to the application to the AoC information, and/or the above processing may be converting the AoC information to a format required for the AS to interact with the user terminal. Thereafter, the AS finds the service session according Session-ID in the CCS charging message carrying the AoC information, and in turn locates the address of the user terminal.

1105: The AS transmits the AoC information to the user terminal through the service interaction channel.

1106: The user terminal displays the AoC information to the user.

In the embodiment of Fig. 11, when the charging system determines that the trigger condition is satisfied, it transmits the update request including the AoC information to the AS on its own initiative, so as to send the AoC information to the AS. A possible alternative is as follows. With reference to 11a, at step 1101', when the charging system determines that the trigger condition is satisfied, it executes step 1102' instead of generating the AoC information, in which the charging system transmits a reminder to the AS. After responding to the reminder, if the AS performs step 1104' and transmits AoC enquiry request to the charging system, the system then regenerates the AoC information and transmits the generated AoC information to the AS through an enquiry request response at step 1105'. Steps 1106' to 1108' of Fig. 11a are the same as steps 1104 to 1106 of Fig. 6, which will not be discussed here.

In the following, the present invention will be explained with reference to detailed embodiments.

In order to make it possible for the AS to enquiry dynamic AoC information to the charging system through the charging interface and for the charging system to transmit dynamic AoC information update notification to the AS, it is necessary to extend the charging interface protocol and add new charging message type which support the AoC information enquiry by the AS to the charging system and the AoC information update sending from the charging system to the AS.

In the following, the method for implementing the present invention is described with reference to an example of extending the online charging interface protocol between the AS and the online charging system.

The online charging interface Ro defined by 3GPP uses Diameter protocol as its bearer protocol.

### A. Customization

Credit Control Request/Credit Control Answer (CCR/CCA) are messages used to realize online credit control and charging functions between the AS and the online charging system. The CCR message has the following parameters:

CC-Request-Type: indicates the CCR type, the value of EVENT_REQUEST indicates the CCR is an event-based charging message.

Requested-Action: indicates the function of the way for requesting message. The online charging interface defines 4 event-based charging request types, which are shown in Table 4.

**Table 4**

| Message function | Function description |
|---|---|
| DIRECT_DEBITING | Direct debiting |
| BALANCE_CHECK | Balance check |
| REFUND_ACCOUNT | Refund account |
| PRICE_ENQUIRY | Price enquiry |

To make it possible for the AS and the charging system to interact the AoC information through the charging interface, an extension is made by the embodiment to the event-based charging type to add AoC_ENABLE and AoC_ENQUIRY functions in Requested-Action, the description of which is shown in the following table.

**Table 5**

| Message Function | Function description |
|---|---|
| AoC_ENABLE | AoC information customization |
| AoC_ENQUIRY | AoC information enquiry |

In order to carry AoC information in the CCR/CCA charging message, the embodiment extends AoC service-related [AVP] and defines new [AoC-Information] and [AoC-Application].

```
    [AoC-Information] = [Service-ID]
    [User-ID]
     [Rate]
     [Balance]
     [Promotion]
     [Bonus]
     [Used Service Unit]
                  [time]
     [volume]
     [money]
     [Charging-info]
    { Result-Code }
     [AoC-Application] = [Enable AoC]
     [Trigger Condition]
     [Trigger Time]
     [Trigger Volume]
     [Other Condition]
```

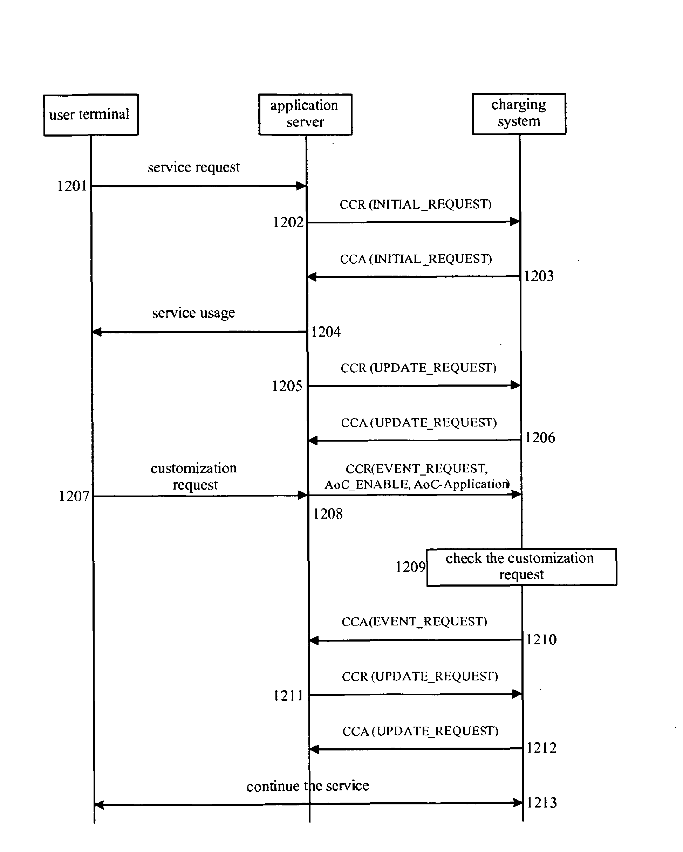

With reference to Fig. 12, an exemplary signaling flow includes the following steps:
1201: The user terminal transmits a service request to the AS.
1202: The AS transmits a CCR charging request to the OCS (in this example the charging system is realized by an online charging system) and establishes a charging session.
1203: The OCS returns a CCA charging response to the AS.
1204: The AS provides service to the user terminal.
1205∼1206: Intermediate charging request (optional).
1207: The user terminal initiates AoC information customization request.(this step may be optional)
1208: The AS initiates customization AoC notification function to the charging system according to the UE's request or on its own initiative. The AS transmits CCR to the OCS for customizing AoC notification, whin the CCR, the AVP parameters related to AoC information may be set as:
   CC-Request-Type = EVENT_REQUEST
   Requested-Action = AoC_ENABLE
   AoC-Application
   [Enable_AoC] = indicating AoC function is enabled
   [Trigger Condition] = trigger condition
   [Trigger Time] = time interval (optional)
   [Trigger Volume] = volume interval (optional)
   [Other Condition] = other trigger condition (optional)
1209: The OCS confirms the AoC reminder customization request. The OCS confirms the validity of the customization information according to the parameters carried in the AoC-Application.
1210: The OCS returns to the AS a CCA carrying confirmation of enabling AoC reminder function.
1211∼1212: Intermediate charging request (optional).
1213: The service continues.

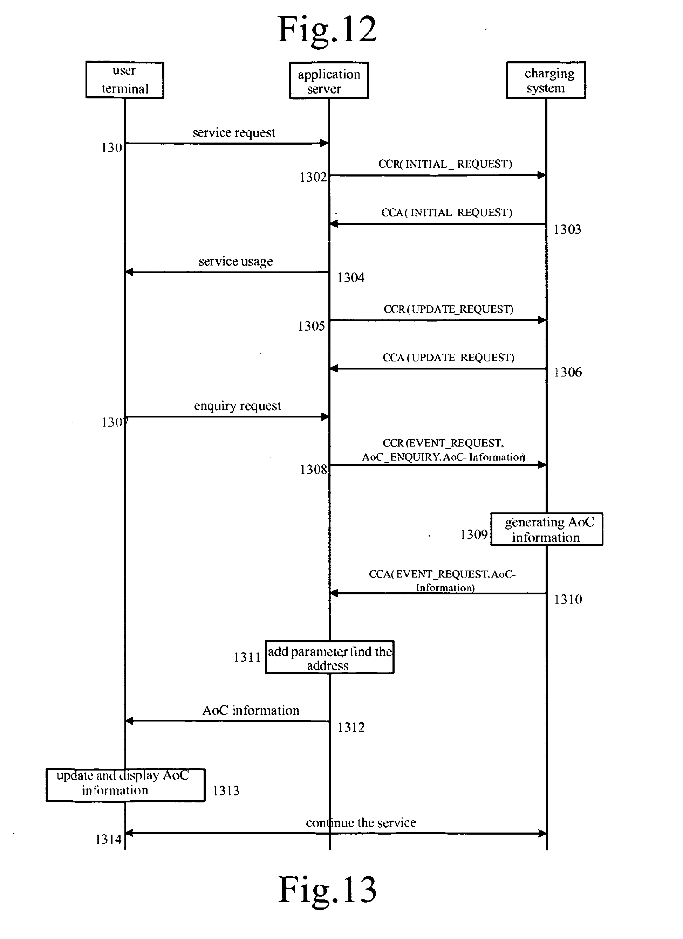

With reference to Fig. 13, another exemplary signaling flow includes the following steps:
**[00166]** 1301: The terminal user transmits a service request to the AS.
[00167] 1302: The AS transmits a CCR charging request to OCS (in this example the charging system is realized by an online charging system).
**[00168]** 1303: The OCS returns a CCA charging response to the AS.
**[00169]** 1304: The AS provides service to the terminal user.
**[00170]** 1305∼1306: Intermediate charging request (optioal).
[00171] 1307: The user terminal initiates an AoC information customization request (optional).
[00172] 1308: The AS transmits CCR to the OCS according to the UE's request or as a result of deciding by itself that it is necessary to present the latest charging information to the user. The AVP parameters related to the AoC information in the CCR may be set as:
   CC-Request-Type = EVENT_REQUEST
   Requested-Action = AoC_ENQUIRY
   AoC-Information
   [Service-ID] = indicating the currently used service
   [User-ID] = indicating the user using the service
[00173] 1309: The OCS generates new AoC information according to the content of the AoC request.
[00174] The OCS computes the AoC information and forms a new AoC-Information, which includes AVP parameters such as Service-ID, User-ID, Rate, Balance, Promotion, Bonus, Used Service Unit, time, volume, money, Charging-info etc according to the parameter carried in AoC-Information.
**[00175]** 1310: The OCA returns a CCA carrying the AoC information to the AS, the AVP parameters related to AoC information in the CCA are set as:
   CC-Request-Type = EVENT_REQUEST
   AoC-Information =
   [Service-ID] = the currently-used service
   [User-ID] = the user using the service
   [Rate] = rate of the current service
   [Balance] = user account balance
   [Promotion] = promotion information
   [Bonus] = bonus information
   [Used Service Unit] = service already used
   [time]
   [volume]
   [money]
   [Charging-info] = charging information comments
1311: The AS adds information related to the application to the AoC information.
1312: The AS transmits the AoC information to the user terminal through the service interaction channel.
1313: The user terminal presents the AoC information to the user.
When the OCS finds that the user dynamic charging information has changed, it triggers an active dynamic AoC information reminder. As an extension, the embodiment further includes a new online charging message: AoC-Update-Request/AoC-Update-Answer (AUR/AUA), which is specially used by the charging system to transmit AoC information update to the AS.

The AUR message has the following format:
- <AUR> ::=: < Diameter Header, REQ, PXY >
< Session-Id >
{Origin-Host }
{ Origin-Realm }
{ Destination-Realm }
{ Destination-Host }
{ Service-Id }
[ User-Name ]
* [ Proxy-Info ]
* [ Route-Record ]
* [ AoC-Information ]
Where Service-Id: service ID currently used
User-Name: the user using the service
AoC-Information: the AoC update information handed-down.
- <AUA> ::=: < Diameter Header, PXY >
< Session-Id >
{ Result-Code }
{ Origin-Host }
{ Origin-Realm }
* [ Proxy-Info ]

AUA is an answer message to AUR transmitted from the AS to the OCS. Result-Code includes the answer code to the AUR message.

The fields with * indicate that they may be repeated for several times.

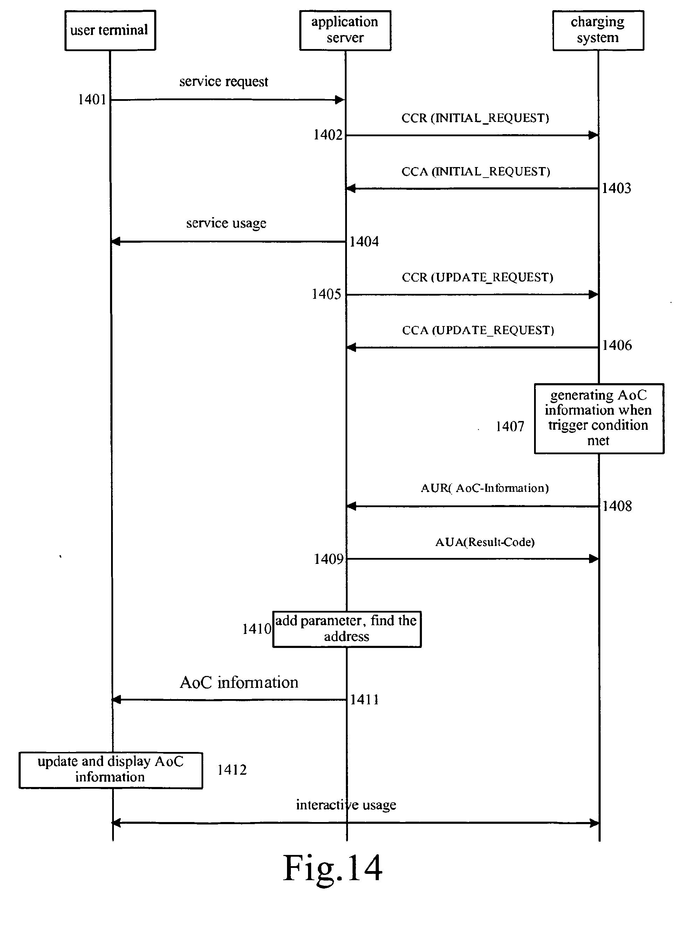

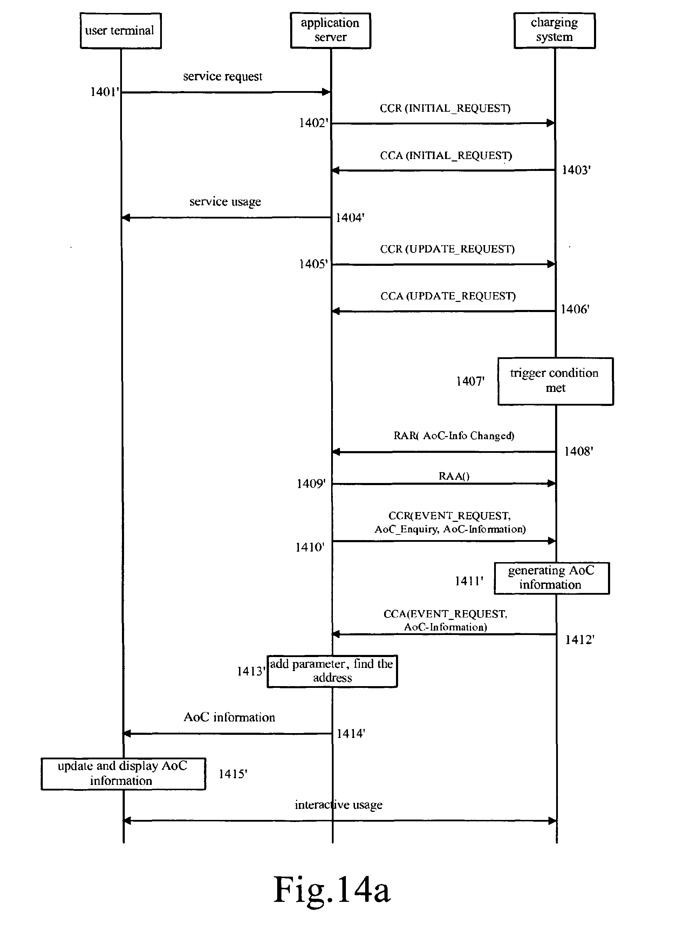

With reference to Fig. 14, a further exemplary signaling flow includes the following steps:
1401: The user terminal transmits a service request to the AS.
1302: The AS transmits a CCR charging request to OCS and establishes a charging session.
1403: The OCS returns a CCA charging response to the AS.
1404: The AS provides the service to the user terminal.
1405∼1406: Intermediate charging request (optional).
1407: The OCS detects the occurrence of the previously customized AoC trigger condition and generates new AoC information.
1408: The OCS transmits an AoC update request to the AS through the online charging interface by using AUR. AoC-Information of AUR includes the updated AoC information.
1409: The AS returns AUA to the OCS.
1410: The AS adds information related to the application to the AoC information.
1411: The AS transmits the AoC information to the user terminal.
1412: The user terminal presents the updated AoC information to the user.

Wherein, in to process of establishing the charging session, the CCR request includes a Session-Id AVP parameter for uniquely indicating one charging session, and Session-Id associates the service application session with the charging session. When the AS receives the charging CCA carrying AoC information send by the OCS, it's matched with the user terminal currently applying for the service according to Session-Id carried in the charging message. Finally, the AoC information is send to the user terminal through the service interaction channel.

In the exemplary flow of Fig. 14, the charging system transmits the AoC information to the AS through AUR message on its own initiative when detecting that the previously customized AoC trigger condition is satisfied. An alternative embodiment may be: when the charging system detects the occurrence of previously customized trigger condition, it transmits an AoC change reminder to the AS instead of generating the AoC information. After responding to the reminder, if the AS transmits AoC enquiry request to the charging system, the charging system then generates AoC information and transmits the generated AoC information to the AS through an enquiry request response. Please refer to Fig. 14a' for the detail.

Steps 1401' to 1406' are the same as steps 1401 to 1406 of Fig. 14, which will not be discussed here.

1407: The OCS detects the occurrence of previously customized trigger condition.

1408: The OCS transmits the AoC change reminder to the AS through the online charging interface by using RAR.

1409: The AS returns a response RAA to RAR to the OCS.

1410: The AS transmits CCR to the OCS, where the AVP parameters related to the AoC information in the CCR are set as:
CC-Request-Type = EVENT_REQUEST //request type is event request
Requested-Action = AoC_ENQUIRY //request action is AoC enquiry
AoC-Information
[Service-ID] = indicating the currently used service
[User-ID] = indicating the user using the service;

1411: The OCS generates new AoC information according to the content of the AoC request.

The OCS computes the AoC information and forms a new AoC-Information, which includes AVP parameters such as Service-ID, User-ID, Rate, Balance, Promotion, Bonus, Used Service Unit, time, volume, money, Charging-info etc according to the parameter carried in AoC-Information.

1412: The OCS returns a CCA carrying the AoC information to the AS, within the CCA the AVP parameters related to the AoC information are set as:
CC-Request-Type = EVENT_REQUEST
AoC-Information =
[Service-ID] = the currently used servcie
[User-ID] = the user using the service
[Rate] =rate of the current service
[Balance] = balance of the user account
[Promotion] = promotion information
[Bonus] = bonus information
[Used Service Unit] = service already used
[time]
[volume]
[money]
[Charging-info] = charging information comments

Steps 1413' to 1415' are the same as steps 1410 to 1412 of Fig. 14, which will not be discussed here.

An embodiment of the present invention further provides a charging system, comprising:

a session unit adapted to establishing a channel used for a charging session with an application server and conducting the charging session;

an AoC information processing unit adapted to acquiring the AoC information and transmitting the AoC information through the channel for the charging session.

The system further includes a verification unit dapted to receiving and verifying AoC information content customization request and/or trigger condition customization request after establishing the charging session; and informing the AoC information processing unit when the verification is successful. The AoC information processing unit acquires the AoC information according to the AoC information content customization request and/or trigger condition customization request.

Before establishing the charging session, the verification unit also receives and verifies the AoC information and/or the trigger condition and saves the information when the verification is successful.

An embodiment of the present invention further provides a system adapted to implementing an AoC supplementary service, comprising: a user terminal, an application server, a third party management system and the above said charging system. The user terminal is adapted to transmit a service request to the AS. The AS is adapted to establish a charging session with the charging system after receiving the request. An information acquisition unit in the charging system acquires user data (such as service subscription information) required by the AoC information from the third party management system. The charging system transmits the AoC information to the AS through the channel for the charging session.

The AS initiates a customization request to the charging system to ask for the customization of the content of the AoC information and transmits a trigger condition.

When the AS takes the initiative to make an AoC information enquiry to the charging system, the charging system generates new AoC information according to the content format in the customization request and the current enquiry request made by the AS, and returns the new AoC information to the AS. Upon receiving the AoC information, the AS adds service comments or converts the format before forwarding it to the user terminal.

When a trigger determination unit in the charging system decides that the trigger condition satisfies the customization, the charging system generates new AoC information and transmits an update request to the AS, where the update request carries the AoC information. Upon receiving the AoC information, the AS adds service comments or converts the format before forwarding it to the user terminal.

In the above, a detail description of the method and system for implementing the AoC supplementary service provided by the present invention is given, in which the principle and implementation of the present invention is elaborated with reference to detailed examples. The above embodiments are only used to help to understand the method and its essence of the present invention. Meanwhile, those skilled in the art can modify the embodiments and their applications according to the idea of the present invention. Thus, the description should not limit the present invention.

## Claims

1. A method for implementing an Advice of Charge, AoC, supplementary service comprising:
receiving (601; 801; 1001), by an application server, a service request initiated by a user terminal, and establishing (502; 602; 802; 1002), by the application server, a charging session with a charging system;
transmitting (603; 803; 1003), by the application server, an AoC information content customization request and/or a trigger condition customization request to the charging system, according to a customization request from the terminal, wherein the customization request is the AoC information content customization request or the trigger condition customization request or both,
verifying (604; 804; 1004), by the charging system, the AoC information content customization request and/or trigger condition customization request; and acquiring the AoC information according to the AoC information content customization request and/or trigger condition customization request when the verification is successful,
and
transmitting the AoC information to the application server through a channel for the charging session;
transmitting (606; 808; 1009), by the application server, the AoC information to a user terminal.

2. The method for implementing an AoC supplementary service of claim 1, wherein the method further comprises:
setting (701), by the user terminal, customization of the AoC information and/or trigger condition to the charging system, through a pre-set service configuration platform;
verifying (703), by the charging system, the AoC information and/or trigger condition, and saving the AoC information and/or trigger condition when the verification is successful.

3. The method for implementing an AoC supplementary service of claim 1, wherein the verifying, by the charging system, the AoC information content customization request and/or trigger condition customization request comprises:
receiving (702), by the charging system, the AoC information content customization request and/or trigger condition customization request transmitted by the application server;
verifying (703), by the charging system, the AoC information content customization request and/or trigger condition customization request according to a pre-set internal strategy for trigger condition and information of the user itself.

4. The method for implementing an AoC supplementary service of claim 1 or 2, wherein the transmitting the AoC information to the application server through a channel for the charging session by the charging system comprises:
receiving (902), by the charging system, an AoC information enquiry request from the application server and generating (903) the AoC information according to the request and the received AoC information content customization request;
returning (904), by the charging system, to the application server an enquiry response information carrying the AoC information;
or
the transmitting the AoC information to the application server through a channel for the charging session by the charging system comprises:
generating (1101), by the charging system, the AoC information according to the received AoC information content customization request, when the charging system detected that the set trigger condition is satisfied;
transmitting (1102), by the charging system, an update request carrying the AoC information to the application server through a charging interface;
or,
the transmitting the AoC information to the application server through a channel for the charging session by the charging system comprises:
transmitting (1102'), by the charging system, a reminder to the application server, when the charging system detected that the set trigger condition is satisfied;
generating (1105') by the charging system, the AoC information satisfying the trigger condition and transmitting the generated AoC information to the application server through an enquiry response upon receiving the AoC information enquiry request from the application server.

5. The method for implementing an AoC supplementary service of claim 1, wherein the step of transmitting the AoC information to the user terminal by the application server comprises:
processing (905), by the application server, the received AoC information;
transmitting (906) the AoC information to the user terminal for displaying the AoC information by a user terminal.

6. The method for implementing an AoC supplementary service of claim 5, wherein the processing comprises:
adding comments related to service;
and/or converting the AoC information to a format required for the application server to interact with the user terminal.

7. A charging system, comprising:
a session unit, adapted to establish (602; 802; 1002) a channel used for a charging session with an application server and conduct the charging session;
**characterized by** further comprising:
an AoC information processing unit, adapted to acquire an AoC information and transmit the AoC information through the channel for the charging session; and
a verification unit, adapted to receive and verify (604; 804; 1004) an AoC information content customization request and/or trigger condition customization request and inform the AoC information processing unit when the verification is successful after establishing the charging session; and receive and verify the AoC information and/or the trigger condition and save them if the verification is successful, before establishing the charging session; wherein the AoC information processing unit is adapted to acquire (1101) the AoC information according to the AoC information content customization request and/or trigger condition customization request.

8. A system for implementing an AoC supplementary service, comprising: a charging system of claim 7, an application server, adapted to receive a service request from a user terminal, establish a charging session with the charging system;
the charging system, adapted to transmit the AoC information to the application server through a channel for the charging session.

## Patentansprüche

1. Verfahren zum Implementieren eines Gebührenauskunfts- bzw. AoC-Ergänzungsdiensts, umfassend:
Empfangen (601; 801; 1001) einer durch ein Benutzerendgerät eingeleiteten Dienstanforderung durch einen Anwendungsserver und Herstellen (502; 602; 802; 1002) einer Vergebührungssitzung mit einem Vergebührungssystem durch den Anwendungsserver;
Übertragen (603; 803;1003) einer AoC-Informationsinhalts-Anpassungsanforderung und/oder einer Triggerbedingungs-Anpassungsanforderung durch den Anwendungsserver zu dem Vergebührungssystem gemäß einer Anpassungsanforderung von dem Endgerät, wobei die Anpassungsanforderung die AoC-Informationsinhalts-Anpassungsanforderung oder die Triggerbedingungs-Anpassungsanforderung oder beides ist,
Verifizieren (604; 804; 1004) der AoC-Informationsinhalts-Anpassungsanforderung und/oder Triggerbedingungs-Anpassungsanforderung durch das Vergebührungssystem, und Beschaffen der AoC-Informationen gemäß der AoC-Informationsinhalts-Anpassungsanforderung und/oder Triggerbedingungs-Anpassungsanforderung, wenn die Verifikation erfolgreich ist,
und
Übertragen der AoC-Informationen zu dem Anwendungsserver durch einen Kanal für die Vergebührungssitzung;
Übertragen (606; 808; 1009) der AoC-Informationen durch den Anwendungsserver zu einem Benutzerendgerät.

2. Verfahren zum Implementieren eines AoC-Ergänzungsdiensts nach Anspruch 1, wobei das Verfahren ferner Folgendes umfasst:
Einrichten (701) von Anpassung der AoC-Informationen und/oder Triggerbedingung für das Vergebührungssystem durch das Benutzerendgerät durch eine voreingestellte Dienstkonfigurationsplattform;
Verifizieren (703) der AoC-Informationen und/oder Triggerbedingung durch das Vergebührungssystem und Abspeichern der AoC-Informationen und/oder Triggerbedingung, wenn die Verifikation erfolgreich ist.

3. Verfahren zum Implementieren eines AoC-Ergänzungsdiensts nach Anspruch 1, wobei das Verifizieren der AoC-Informationsinhalts-Anpassungsanforderung und/oder Triggerbedingungs-Anpassungsanforderung durch das Vergebührungssystem Folgendes umfasst:
Empfangen (702) der durch den Anwendungsserver übertragenen AoC-Informationsinhalts-Anpassungsanforderung und/oder Triggerbedingungs-Anpassungsanforderung durch das Vergebührungssystem;
Verifizieren (703) der AoC-Informationsinhalts-Anpassungsanforderung und/oder Triggerbedingungs-Anpassungsanforderung durch das Vergebührüngssystem gemäß einer voreingestellten internen Strategie für Triggerbedingung und Informationen des Benutzers selbst.

4. Verfahren zum Implementieren eines AoC-Ergänzungsdiensts nach Anspruch 1 oder 2, wobei das Übertragen der AoC-Informationen zu dem Anwendungsserver durch einen Kanal für die Vergebührungssitzung durch das Vergebührungssystem Folgendes umfasst:
Empfangen (902) einer AoC-Informationsanfrageanforderung durch das Vergebührungssystem von dem Anwendungsserver und Erzeugen (903) der AoC-Informationen gemäß der Anforderung und der empfangenen AoC-Informationsinhalts-Anpassungsanforderung;
Zurückgeben (904) einer Anfrageantwortinformation durch das Vergebührungssystem, die die AoC-Informationen führt;
oder
das Übertragen der AoC-Informationen zu dem Anwendungsserver durch einen Kanal für die Vergebührungssitzung durch das Vergebührungssystem Folgendes umfasst:
Erzeugen (1101) der AoC-Informationen durch das Vergebührungssystem gemäß der empfangenen AoC-Informationsinhalts-Anpassungsanforderung, wenn das Vergebührungssystem detektiert hat, dass die gesetzte Triggerbedingung erfüllt ist;
Übertragen (1102) einer Aktualisierungsanforderung, die die AoC-Informationen führt, durch das Vergebührungssystem zu dem Anwendungsserver durch eine Vergebührungsschnittstelle;
oder
das Übertragen der AoC-Informationen zu dem Anwendungsserver durch einen Kanal für die Vergebührungssitzung durch das Vergebührungssystem Folgendes umfasst:
Übertragen (1102') einer Erinnerung zu dem Anwendungsserver durch das Vergebührungssystem, wenn das Vergebührungssystem detektiert hat, dass die gesetzte Triggerbedingung erfüllt ist;
Erzeugen (1105') der die Triggerbedingung erfüllenden AoC-Informationen durch das Vergebührungssystem und Übertragen der erzeugten AoC-Informationen zu dem Anwendungsserver durch eine Anfrageantwort beim Empfang der AoC-Informationsanfrageanforderung von dem Anwendungsserver.

5. Verfahren zum Implementieren eines AoC-Ergänzungsdiensts nach Anspruch 1, wobei der Schritt des Übertragens der AoC-Informationen zu dem Benutzerendgerät durch den Anwendungsserver Folgendes umfasst:
Verarbeiten (905) der empfangenen AoC-Informationen durch den Anwendungsserver;
Übertragen (906) der AoC-Informationen zu dem Benutzerendgerät zum Anzeigen der AoC-Informationen durch ein Benutzerendgerät.

6. Verfahren zum Implementieren eines AoC-Ergänzungsdiensts nach Anspruch 5, wobei die Verarbeitung Folgendes umfasst:
Hinzufügen von Kommentaren in Bezug auf Dienst;
und/oder Umsetzen der AoC-Informationen in ein Format, das für den Anwendungsserver zur Interaktion mit dem Benutzerendgerät erforderlich ist.

7. Vergebührungssystem, umfassend:
eine Sitzungseinheit, ausgelegt zum Herstellen (602; 802; 1002) eines für eine Vergebührungssitzung mit einem Anwendungsserver verwendeten Kanals und Durchführen der Vergebührungssitzung;
**dadurch gekennzeichnet, dass** es ferner Folgendes umfasst:
eine AoC-Informationsverarbeitungseinheit, ausgelegt zum Beschaffen einer AoC-Information und Übertragen der AoC-Information durch den Kanal für die Vergebührungssitzung; und
eine Verifikationseinheit, ausgelegt zum Empfangen und Verifizieren (604; 804; 1004) einer AoC-Informationsinhalts-Anpassungsanforderung und/oder Triggerbedingungs-Anpassungsanforderung und Informieren der AoC-Informationsverarbeitungseinheit, wenn die Verifikation erfolgreich ist, nachdem die Vergebührungssitzung hergestellt wird; und Empfangen und Verifizieren der AoC-Informationen und/oder der Triggerbedingung und Abspeichern dieser, wenn die Verifikation erfolgreich ist, bevor die Vergebührungssitzung hergestellt wird; wobei die AoC-Informationsverarbeitungseinheit ausgelegt ist zum Beschaffen (1101) der AoC-Informationen gemäß der AoC-Informationsinhalts-Anpassungsanforderung und/oder Triggerbedingungs-Anpassungsanforderung.

8. System zum Implementieren eines AoC-Ergänzungsdienst, umfassend: ein Vergebührungssystem nach Anspruch 7, einen Anwendungsserver, ausgelegt zum Empfangen einer Dienstanforderung von einem Benutzerendgerät, Herstellen einer Vergebührungssitzung mit dem Vergebührungssystem;
das Vergebührungssystem, ausgelegt zum Übertragen der AoC-Informationen zu dem Anwendungsserver durch einen Kanal für die Vergebührungssitzung.

## Revendications

1. Procédé de mise en oeuvre d'un service supplémentaire d'Avertissement de facturation, AoC, comprenant :
la réception (601 ; 801 ; 1001), par un serveur d'application, d'une requête de service lancée par un terminal utilisateur, et l'établissement (502 ; 602 ; 802 ; 1002), par le serveur d'application, d'une session de facturation avec un système de facturation ;
la transmission (603 ; 803 ; 1003), par le serveur d'application, au système de facturation, d'une requête de personnalisation de contenu d'information AoC et/ou d'une requête de personnalisation de condition de déclenchement, en fonction d'une requête de personnalisation provenant du terminal, dans lequel la requête de personnalisation est la requête de personnalisation de contenu d'information AoC ou la requête de personnalisation de condition de déclenchement ou les deux,
la vérification (604 ; 804 ; 1004), par le système de facturation, de la requête de personnalisation de contenu d'information AoC et/ou de la requête de personnalisation de condition de déclenchement ; et l'acquisition de l'information AoC en fonction de la requête de personnalisation de contenu d'information AoC et/ou de la requête de personnalisation de condition de déclenchement quand la vérification est positive,
et
la transmission de l'information AoC au serveur d'application par le biais d'un canal pour la session de facturation ;
la transmission (606 ; 808 ; 1009), par le serveur d'application, de l'information AoC à un terminal utilisateur.

2. Procédé de mise en oeuvre d'un service supplémentaire AoC selon la revendication 1, le procédé comprenant en outre :
l'imposition (701), par le terminal utilisateur, d'une personnalisation de l'information AoC et/ou d'une condition de déclenchement au système de facturation, par le biais d'une plate-forme de configuration de service préétablie ;
la vérification (703), par le système de facturation, de l'information AoC et/ou de la condition de déclenchement, et la sauvegarde de l'information AoC et/ou de la condition de déclenchement quand la vérification est positive.

3. Procédé de mise en oeuvre d'un service supplémentaire AoC selon la revendication 1, dans lequel la vérification, par le système de facturation, de la requête de personnalisation de contenu d'information AoC et/ou de la requête de personnalisation de condition de déclenchement comprend :
la réception (702), par le système de facturation, de la requête de personnalisation de contenu d'information AoC et/ou de la requête de personnalisation de condition de déclenchement par le serveur d'application ;
la vérification (703), par le système de facturation, de la requête de personnalisation de contenu d'information AoC et/ou de la requête de personnalisation de condition de déclenchement en fonction d'une stratégie interne préétablie pour la condition de déclenchement et l'information de l'utilisateur même.

4. Procédé de mise en oeuvre d'un service supplémentaire AoC selon la revendication 1 ou 2, dans lequel la transmission de l'information AoC au serveur d'application par le biais d'un canal pour la session de facturation par le système de facturation comprend
la réception (902), par le système de facturation, d'une requête d'interrogation d'information AoC depuis le serveur d'application et la génération (903) de l'information AoC en fonction de la requête et de la requête de personnalisation de contenu d'information AoC reçue ;
le renvoi (904), par le système de facturation, au serveur d'application d'une information de réponse d'interrogation incluant l'information AoC ;
ou
la transmission de l'information AoC au serveur d'application par le biais d'un canal pour la session de facturation par le système de facturation comprend :
la génération (1101), par le système de facturation, de l'information AoC en fonction de la requête de personnalisation de contenu d'information AoC reçue, quand le système de facturation a détecté que la condition de déclenchement imposée est satisfaite ;
la transmission (1102), par le système de facturation, d'une requête d'actualisation incluant l'information AoC au serveur d'application par le biais d'une interface de facturation ;
ou
la transmission de l'information AoC au serveur d'application par le biais d'un canal pour la session de facturation par le système de facturation comprend :
la transmission (1102'), par le système de facturation, d'un rappel au serveur d'application, quand le système de facturation a détecté que la condition de déclenchement imposée est satisfaite;
la génération (1105') par le système de facturation, de l'information AoC satisfaisant la condition de déclenchement et la transmission de l'information AoC générée au serveur d'application par le biais d'une réponse d'interrogation à la réception de la requête d'interrogation d'information AoC depuis le serveur d'application.

5. Procédé de mise en oeuvre d'un service supplémentaire AoC selon la revendication 1, dans lequel l'étape de transmission de l'information AoC au terminal utilisateur par le serveur d'application comprend :
le traitement (905), par le serveur d'application, de l'information AoC reçue ;
la transmission (906) de l'information AoC au terminal utilisateur en vue de son affichage par un terminal utilisateur.

6. Procédé de mise en oeuvre d'un service supplémentaire AoC selon la revendication 5, dans lequel le traitement comprend :
l'ajout de commentaires concernant le service ;
et/ou la conversion de l'information AoC en un format requis par le serveur d'application pour interagir avec le terminal utilisateur.

7. Système de facturation, comprenant :
une unité de session, adaptée pour établir (602 ; 802 ; 1002) un canal utilisé pour une session de facturation avec un serveur d'application et mener la session de facturation
**caractérisé en ce qu'**il comprend en outre :
une unité de traitement d'information AoC, adaptée pour acquérir une information AoC et transmettre l'information AoC par le biais du canal pour la session de facturation ; et
une unité de vérification, adaptée pour recevoir et vérifier (604 ; 804 ; 1004) une requête de personnalisation de contenu d'information AoC et/ou une requête de personnalisation de condition de déclenchement et informer l'unité de traitement d'information AoC quand la vérification est positive après l'établissement de la session de facturation ; et recevoir et vérifier l'information AoC et/ou la condition de déclenchement et les sauvegarder si la vérification est positive, avant l'établissement de la session de facturation ; dans lequel l'unité de traitement d'information AoC est adaptée pour acquérir (1101) l'information AoC en fonction de la requête de personnalisation de contenu d'information AoC et/ou la requête de personnalisation de condition de déclenchement.

8. Système de mise en oeuvre d'un service supplémentaire AoC, comprenant : un système de facturation selon la revendication 7, un serveur d'application, adapté pour recevoir une requête de service depuis un terminal utilisateur, établir une session de facturation avec le système de facturation ;
le système de facturation étant adapté pour transmettre l'information AoC au serveur d'application par le biais d'un canal pour la session de facturation.
